(19) Europäisches Patentamt
European Patent Office
Office européen des brevets

(11) **EP 4 730 767 A1**

(12) **EUROPEAN PATENT APPLICATION**

(43) Date of publication:
**22.04.2026 Bulletin 2026/17**

(21) Application number: **24306726.1**

(22) Date of filing: **17.10.2024**

(51) International Patent Classification (IPC):
*H04N 19/105* (2014.01)     *H04N 19/147* (2014.01)
*H04N 19/176* (2014.01)     *H04N 19/513* (2014.01)

(52) Cooperative Patent Classification (CPC):
**H04N 19/176; H04N 19/105; H04N 19/147; H04N 19/521**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **LE LEANNEC, Fabrice
  35830 BETTON (FR)**
• **NASER, Karam
  35250 MOUAZE (FR)**
• **DUMAS, Thierry
  35700 RENNES (FR)**
• **RADOSAVLJEVIC, Milos
  35000 RENNES (FR)**

(74) Representative: **Vossius & Partner
Patentanwälte Rechtsanwälte mbB
Siebertstraße 3
81675 München (DE)**

(54) **INTRA TEMPLATE MATCHING WITH MERGE BLOCK VECTOR DIFFERENCE**

(57)     In one implementation, a video decoder obtains a base block vector for a block of a picture in an intra template matching prediction mode; decode a block vector difference for the block; obtains a block vector for the block based on the base block vector and the block vector difference for the block; obtains a prediction block for the block based on the block vector for the block; and decodes the block based on the prediction block for the block. On the encoder side, a video encoder obtains the base block vector for the block in an intra template matching prediction mode; encodes the block vector difference; obtains the block vector for the block based on the base block vector and the block vector difference; obtains the prediction block for the block based on the block vector; and encodes the block based on the prediction block.

FIG. 18

EP 4 730 767 A1

**Description**

## BACKGROUND

The present application is related to a method and an apparatus for intra prediction in video encoding and decoding.

## BRIEF SUMMARY

Briefly stated, in one embodiment, a method of video decoding is presented, comprising: obtaining a base block vector for a block of a picture in an intra template matching prediction mode; decoding a block vector difference for the block; obtaining a block vector for the block based on the base block vector and the block vector difference for the block; obtaining a prediction block for the block based on the block vector for the block; and decoding the block based on the prediction block for the block.

In another embodiment, an apparatus for video decoding is presented, comprising one or more processors and at least one memory coupled to the one or more processors, wherein the one or more processors are configured to: obtain a base block vector for a block of a picture in an intra template matching prediction mode; decode a block vector difference for the block; obtain a block vector for the block based on the base block vector and the block vector difference for the block; obtain a prediction block for the block based on the block vector for the block; and decode the block based on the prediction block for the block.

In another embodiment, a method of video encoding is presented, comprising: obtaining a base block vector for a block of a picture in an intra template matching prediction mode; encoding a block vector difference for the block; obtaining a block vector for the block based on the base block vector and the block vector difference for the block; obtaining a prediction block for the block based on the block vector for the block; and encoding the block based on the prediction block for the block.

In another embodiment, an apparatus for video encoding is presented, comprising one or more processors and at least one memory coupled to the one or more processors, wherein the one or more processors are configured to: obtain a base block vector for a block of a picture in an intra template matching prediction mode; encode a block vector difference for the block; obtain a block vector for the block based on the base block vector and the block vector difference for the block; obtain a prediction block for the block based on the block vector for the block; and encode the block based on the prediction block for the block.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates a current CTU processing order and its available reference samples in the current and left CTUs;
FIG. 5 illustrates an example of how to derive AR-BVP;
FIG. 6 illustrates the five positions in Bn (n is set to 1);
FIG. 7 illustrates padding candidates for the replacement of the zero-vector in the IBC list;
FIG. 8 illustrates IBC candidate clustering based on the L2 distance and the TM cost;
FIG. 9 illustrates an extended reference region for IBC in ECM;
FIG. 10 illustrates the intra template matching search area used;
FIG. 11 illustrates an example of IntraTMP-AR-BVP's construction;
FIG. 12 illustrates the five positions in a reference block;
FIG. 13 illustrates spatial part of the filter;
FIG. 14 illustrates the reference area used to derive the filter coefficients;
FIG. 15 illustrates a process to parse IntraTMP relate syntax elements at the decoder side in ECM8;
FIG. 16 illustrates the process to decode a CU coded in the IntraTMP mode in ECM8;

FIG. 17 illustrates a process that introduces the MBVD mode into the IntraTMP coding mode according to one or more embodiments; and

FIG. 18 illustrates an IntraTMP CU decoding process according to one or more embodiments.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

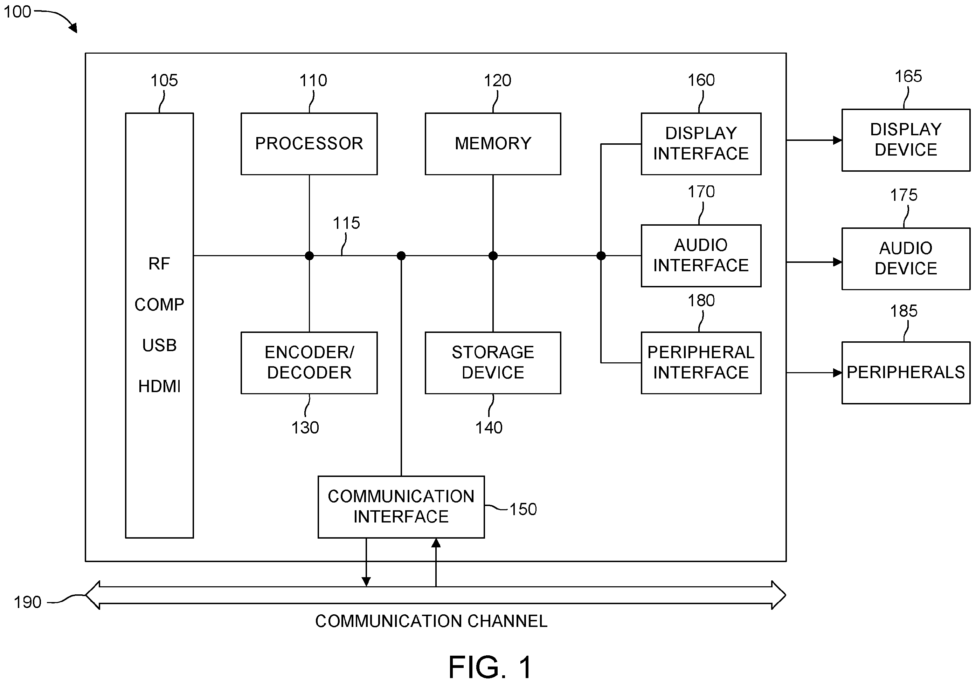

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

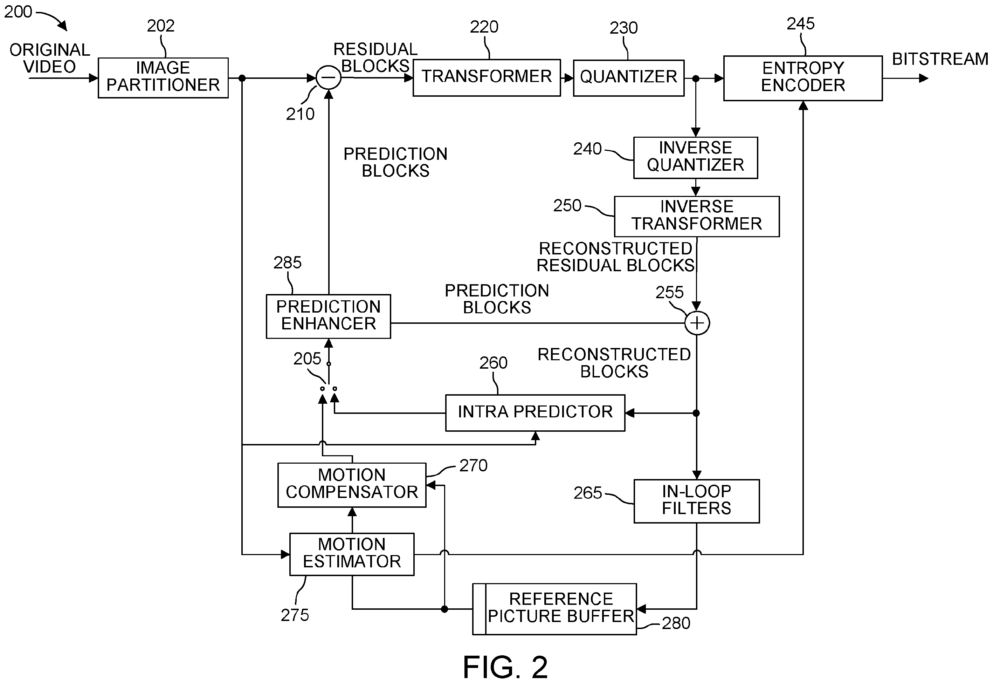

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

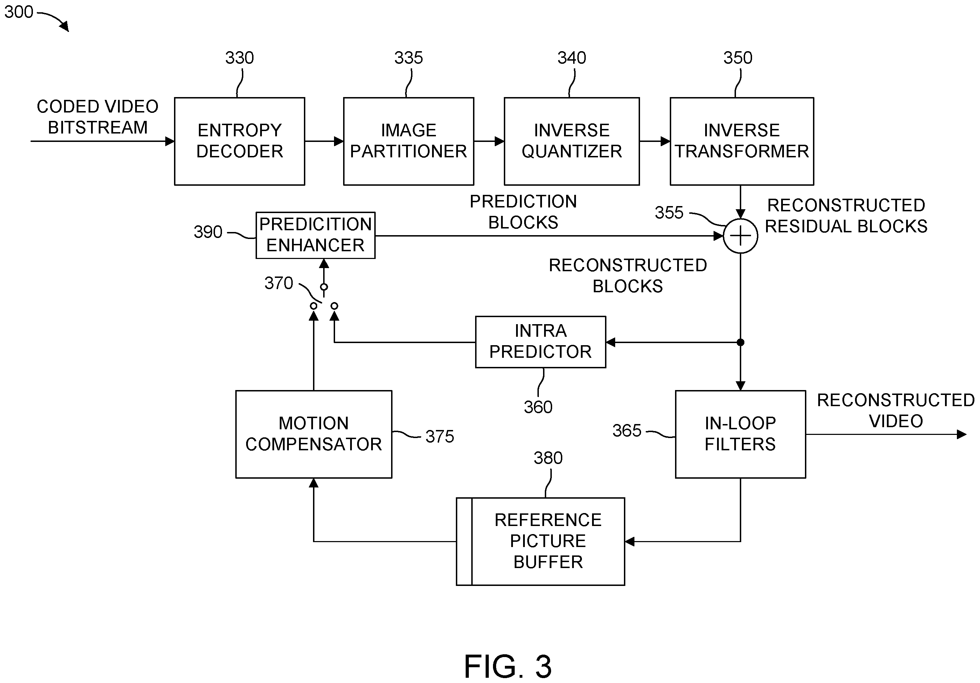

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by $C$).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

**Intra block copy coding in VVC and ECM**

Intra block copy (IBC) is a tool used in HEVC and VVC for screen content coding. It is well known that it significantly improves the coding efficiency of screen content materials. Since IBC mode is implemented as a block level coding mode, block matching (BM) is performed at the encoder to find the optimal block vector (or motion vector) for each CU. A block vector indicates the displacement from the current block to a reference block, which is already reconstructed inside the current picture. The luma block vector of an IBC-coded CU is in integer precision. The chroma block vector rounds to integer precision as well. When combined with AMVR (Adaptive Motion Vector Resolution), the IBC mode can switch between 1-pel and 4-pel motion vector precisions. An IBC-coded CU is treated as the third prediction mode other than intra or inter prediction modes. The IBC mode is applicable to the CUs with both width and height smaller than or equal to 64 luma samples.

At the CU level, the IBC mode is signalled with a flag, and it can be signaled as an IBC AMVP mode or IBC skip/merge mode as follows:

- IBC skip/merge mode: a merge candidate index is used to indicate which of the block vectors in the list from neighboring candidate IBC coded blocks is used to predict the current block. The merge list consists of spatial, HMVP, and pairwise candidates.

- IBC AMVP mode: block vector difference is coded in the same way as a motion vector difference. The block vector prediction method uses two candidates as predictors, one from left neighbor and one from above neighbor (if IBC coded). When either neighbor is not available, a default block vector will be used as a predictor. A flag is signaled to indicate the block vector predictor index.

**IBC reference region**

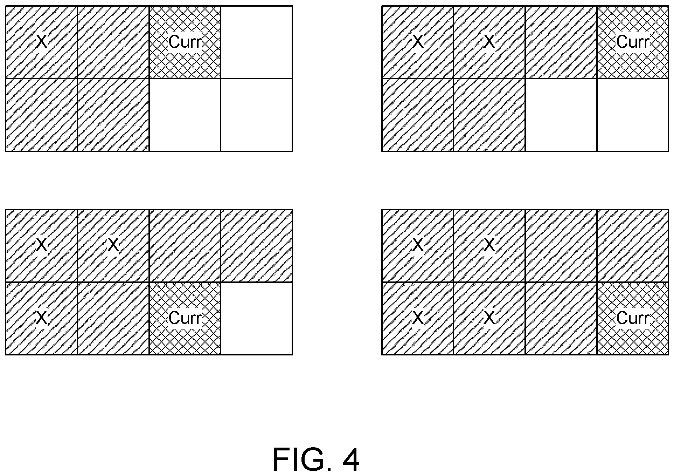

To limit memory consumption and decoder complexity, the IBC in VVC allows only the reconstructed portion of the predefined area including the region of current CTU and some region of the left CTU. FIG. 4 illustrates the reference region of IBC Mode, where a CTU is 128x128 and each block represents 64x64 luma sample unit.
Depending on the location of the current coding CU location within the current CTU, the following applies:

- If the current block falls into the top-left 64x64 block of the current CTU, then in addition to the already reconstructed samples in the current CTU, it can also refer to the reference samples in the bottom-right 64x64 blocks of the left CTU, using IBC mode. The current block can also refer to the reference samples in the bottom-left $64\times64$ block of the left CTU and the reference samples in the top-right $64\times64$ block of the left CTU, using CPR mode.

- If the current block falls into the top-right $64\times64$ block of the current CTU, then in addition to the already reconstructed samples in the current CTU, if luma location (0, 64) relative to the current CTU has not yet been reconstructed, the current block can also refer to the reference samples in the bottom-left $64\times64$ block and bottom-right $64\times64$ block of the left CTU, using CPR mode; otherwise, the current block can also refer to reference samples in bottom-right $64\times64$ block of the left CTU.

- If the current block falls into the bottom-left $64\times64$ block of the current CTU, then in addition to the already reconstructed samples in the current CTU, if luma location (64, 0) relative to the current CTU has not yet been reconstructed, the current block can also refer to the reference samples in the top-right $64\times64$ block and bottom-right 64x64 block of the left CTU, using CPR mode. Otherwise, the current block can also refer to the reference samples in the bottom-right $64\times64$ block of the left CTU, using CPR mode.

- If the current block falls into the bottom-right $64\times64$ block of the current CTU, it can only refer to the already reconstructed samples in the current CTU, using CPR mode.

This restriction allows the IBC mode to be implemented using local on-chip memory for hardware implementations.

**IBC merge/AMVP list construction in ECM**

The IBC merge/AMVP list construction in ECM is modified compared to VVC, as follows:

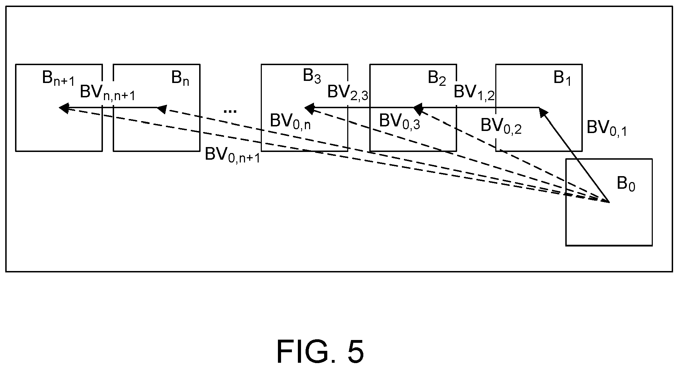

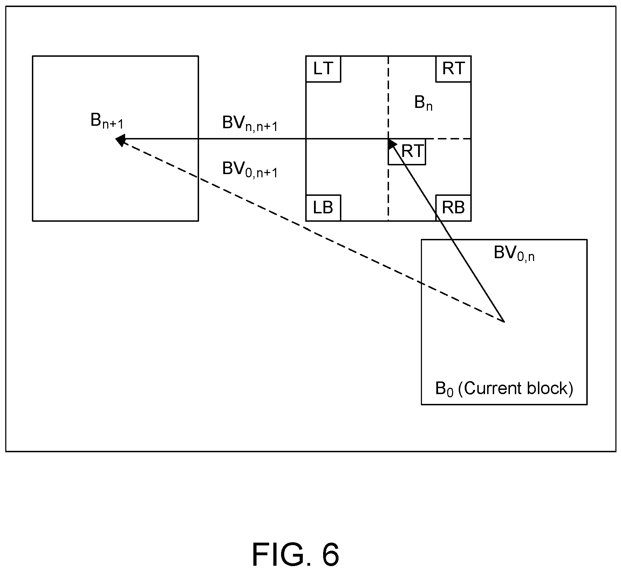

- Only if an IBC merge/AMVP candidate is valid, it can be inserted into the IBC merge/AMVP candidate list.
- Above-right, bottom-left, and above-left spatial candidates and one pairwise average candidate can be added into the IBC merge/AMVP candidate list.
- Template based adaptive reordering (ARMC-TM) is applied to IBC merge list.
- Candidates from non-adjacent spatial neighboring blocks (a.k.a., non-adjacent candidates) can be added to the candidate lists of IBC merge modes and IBC AMVP. These non-adjacent candidates are inserted between the adjacent spatial candidates and the HBVP (History-Based Block Vector Prediction, same concept as HMVP but for block vector prediction) candidates for both IBC merge and IBC AMVP. The same reference area of non-adjacent merge in regular inter mode is reused for the IBC.
- Auto-relocated block vector prediction (AR-BVP) candidates are added to the IBC merge and AMVP candidate list right after the HBVP candidates. As shown in FIG. 5, a guiding block vector $BV_{0,1}$ (i.e., an existing BVP already in the candidate list) associated with the current block $B_0$ points to a reference block $B_1$. If $B_1$ has a BV denoted as $BV_{1,2}$ pointing to a reference block $B_2$, then $BV_{0,2}$, given by $BV_{0,2} = BV_{0,1} + BV_{1,2}$, is defined as the AR-BVP, guided by $BV_{0,1}$. When deriving $BV_{n,n+1}$ guided by $BV_{0,n}$, all five positions including top-left (e.g., LT in FIG. 6), top-right (e.g., RT in FIG. 6), center (e.g., Ctr in FIG. 6), bottom-left (e.g., LB in FIG. 6), and bottom-right (e.g., RB in FIG. 6) positions of $B_n$ are checked to find $BV_{n,n+1}$.
- Restriction that adjacent spatial candidates cannot be used for IBC merge of a 4x4 CU is removed.

The HMVP table size for IBC is increased to 25 entries. After up to 20 IBC merge candidates are derived with full pruning, they are reordered together. After reordering, the first 6 candidates with the lowest template matching costs are selected as the final candidates in the IBC merge list.

The zero vectors' candidates to pad the IBC Merge/AMVP list are replaced with a set of BVP candidates located in the IBC reference region. A zero vector is invalid as a block vector in IBC merge mode, consequently it is discarded as BVP in the IBC candidate list.

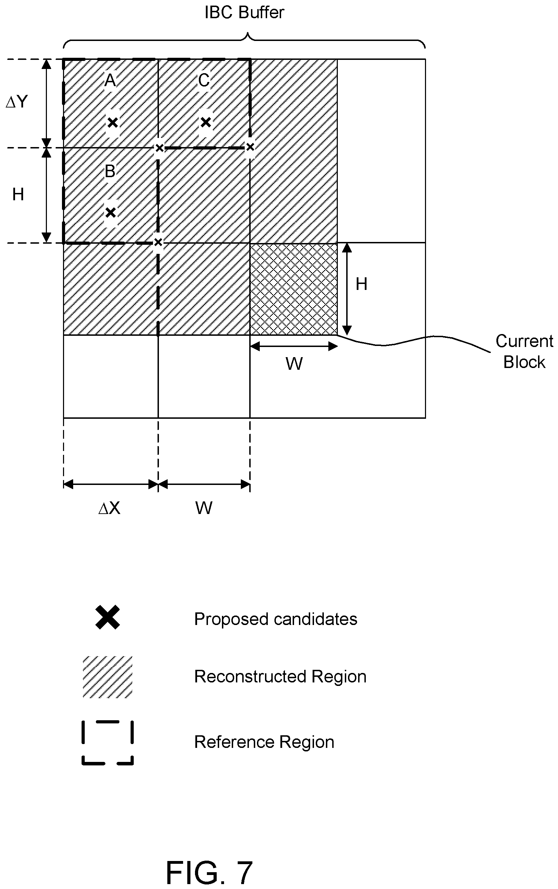

Three candidates are located on the nearest corners of the reference region, and three additional candidates are determined in the middle of the three sub-regions (A, B, and C), whose coordinates are determined by the width, and height of the current block and the $\Delta X$ and $\Delta Y$ parameters, as is depicted in FIG. 7.

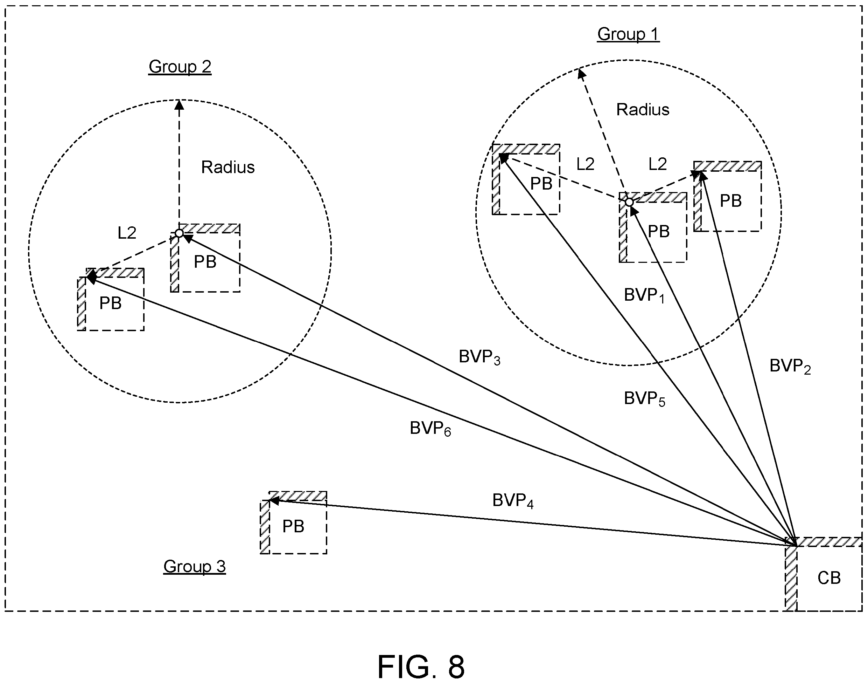

During the IBC AMVP list construction, a clustering of the BVP candidates may be applied when both BV candidate components are non-zero. The clustering as shown in FIG. 8 with L2 distance is applied if there are more than 2 valid BV candidates and up to 6 candidates are clustered, the clustering radius is defined as:

$$Radius = \log_2((cbWidth \cdot cbHeight) \gg MIN\_PU\_SIZE)$$

The clustering method is applied in the candidate list order, and the candidates assigned to a group are removed from the list for the subsequent clusters. In each group, the BVP with a lowest TM cost is selected as the representative candidate of that group. Finally, the representative candidates of the two first groups are chosen as the candidates for the IBC AMVP list.

Furthermore, if one of BV candidate components is zero or the block is coded in RRIBC (Reconstruction-Reordered IBC, a tool which flips samples of the reconstructed area according to a flip type assigned to the current block), a flag is signalled to indicate this case with a directional flag indicating that the horizontal or vertical component is non-zero. Instead of usual IBC AMVP list, two new BVP candidates are derived, and the sign of the non-zero BV component is derived at decoder side. The AMVP BVP0 is set to the nearest valid location to the current block (-cbWidth or -cbHeight), so the non-zero BVD is always negative, pointing to the left for a BV with a zero vertical component or to the above for a BV with a zero horizontal component. Likewise, the AMVP BVP1 is set to the farthest position from the current block in the valid reference region, that is the left boundary or the top boundary of the IBC search region. Consequently, if BVP1 is selected, the BVD is always positive, pointing to the right for BV with a zero vertical component or to the bottom for a BV with a zero horizontal component.

### IBC Merge Mode with Block Vector Difference (MBVD coding mode)

The IBC merge mode with block vector differences is supported in ECM. It is initially proposed in JVET-AA0061 (see JVET-AA0061, "EE2-3.1: IBC Merge Mode with Block Vector Differences", Na Zhang, et al., Joint Video Experts Team (JVET) of ITU-T SG 16 WP 3 and ISO/IEC JTC 1/SC 29, 27th Meeting, by teleconference, July 2022).

The distance set for the block vector differences supported in MBVD is {1-pel, 2-pel, 4-pel, 8-pel, 12-pel, 16-pel, 24-pel, 32-pel, 40-pel, 48-pel, 56-pel, 64-pel, 72-pel, 80-pel, 88-pel, 96-pel, 104-pel, 112-pel, 120-pel, 128-pel}, and the BVD directions are two horizontal and two vertical directions.

The base candidates are selected from the first five candidates in the reordered IBC merge list. Based on the SAD cost between the template (one row above and one column left to the current block) and its reference for each refinement position, all the possible MBVD refinement positions (20×4) for each base candidate are reordered. Finally, the top 8 refinement positions with the lowest template SAD costs are kept as available positions, consequently for MBVD index coding.

### IBC with Template Matching in ECM

Template Matching is used in IBC for both IBC merge mode and IBC AMVP mode.

The IBC-TM merge list is modified compared to the one used by the regular IBC merge mode such that the candidates are selected according to a pruning method with a motion distance between the candidates as in the regular TM merge mode. The ending zero motion fulfillment is replaced by motion vectors to the left (-W, 0), top (0, -H) and top-left (-W, -H), where W is the width and H the height of the current CU.

In the IBC-TM merge mode, the selected candidates are refined with the Template Matching method prior to the RDO or decoding process. The IBC-TM merge mode has been put in competition with the regular IBC merge mode and a TM-merge flag is signaled.

In the IBC-TM AMVP mode, up to 3 candidates are selected from the IBC-TM merge list. Each of those 3 selected candidates are refined using the Template Matching method and sorted according to their resulting Template Matching cost. Only the 2 first ones are then considered in the motion estimation process as usual.

The Template Matching refinement for both IBC-TM merge and AMVP modes is quite simple since IBC motion vectors are constrained (i) to be integer and (ii) within a reference region as shown in FIG. 4. Hence, in IBC-TM merge mode, all refinements are performed at integer precision, and in IBC-TM AMVP mode, they are performed either at integer or 4-pel precision depending on the AMVR value. Such a refinement only accesses samples without interpolation. In both cases, the refined motion vectors and the used template in each refinement step must respect the constraint of the reference region.

### IBC reference region in ECM

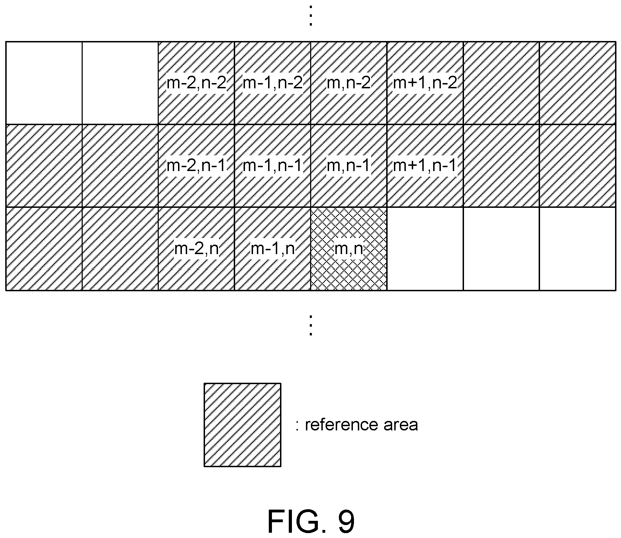

The reference area for IBC is extended to two CTU rows above. FIG. 9 illustrates the reference area for coding CTU (m, n). Specifically, for CTU (m, n) to be coded, the reference area includes CTUs with index (m-2, n-2), ..., (W, n-2), (0, n-1), ..., (W, n-1), (0, n), ..., (m, n), where W denotes the maximum horizontal index within the current tile, slice or picture. When the CTU size is 256x256, the reference area is limited to one CTU row above. This setting ensures that for a CTU size being 128x128 or 256x256, IBC does not require extra memory in the current ETM platform. The per-sample block vector search (or called local search) range is limited to [-(C « 1), C » 2] horizontally and [-C, C » 2] vertically to adapt to the reference area extension, where C denotes the CTU size.

### IBC interaction with other coding tools in ECM

The interaction between the IBC mode and other inter coding tools in VVC, such as pairwise merge candidate, history-based motion vector predictor (HMVP), combined intra/inter prediction mode (CIIP), merge mode with motion vector difference (MMVD), and geometric partitioning mode (GPM) are as follows:

- IBC can be used with pairwise merge candidate and HMVP. A new pairwise IBC merge candidate can be generated by averaging two IBC merge candidates. For HMVP, IBC motion is inserted into the history buffer for future referencing.
- IBC cannot be used in combination with the following inter tools: affine motion.
- Since ECM version 8.0, IBC can be used in combination with CIIP, MMVD, and GPM.
- IBC is not allowed for the chroma coding blocks when DUAL_TREE partition is used.

In VVC, unlike in the HEVC screen content coding extension, the current picture is not included as one of the reference pictures in the reference picture list 0 for IBC prediction. The derivation process of motion vectors for IBC mode excludes all neighboring blocks in inter mode and vice versa. The following IBC design aspects are applied in VVC:

- IBC shares the same process as in regular MV merge including with pairwise merge candidate and history-based motion predictor but disallows TMVP and zero vector because they are invalid for IBC mode.
- Separate HMVP buffer (5 candidates each) is used for conventional MV and IBC.
- Block vector constraints are implemented in the form of bitstream conformance constraint, the encoder needs to ensure that no invalid vectors are present in the bit-stream, and merge shall not be used if the merge candidate is invalid (out of range or 0). Such bitstream conformance constraint is expressed in terms of a virtual buffer as described below.
- For deblocking, IBC is handled as inter mode.
- If the current block is coded using the IBC prediction mode, AMVR does not use quarter-pel; instead, AMVR is signaled to only indicate whether MV is inter-pel or 4 integer-pel.
- The number of IBC merge candidates can be signaled in the slice header separately from the numbers of regular, subblock, and geometric merge candidates.

### ITMP (Intra Template Matching Prediction) prediction mode in ECM

Intra template matching prediction (Intra TMP, ITMP, or IntraTMP) is a special intra prediction mode that copies the best prediction block from the reconstructed part of the current frame, whose L-shaped template best matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

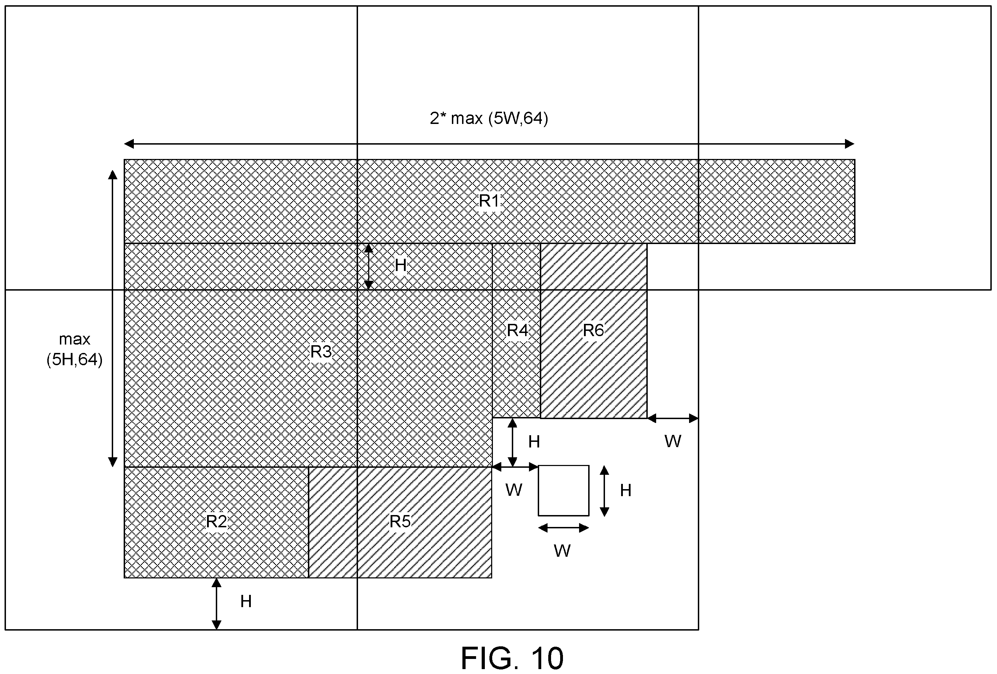

The prediction signal is generated by matching the L-shaped, Top-only or Left-only causal neighbor of the current block with another block in a predefined search area in FIG. 10. There are 6 predefined search areas, i.e., R1 to R6 in FIG. 10 which contain the reconstructed samples from the top and left CTUs as well as part of the reconstructed samples within the current CTU that are located above, left, bottom-left and top-right to the current block.

IntraTMP employs an implicit merge mode, where merge candidates are considered without signaling a merge flag or index. Specifically, the reference positions pointed by the block vectors of all the adjacent and non-adjacent merge candidates (coded in IntraTMP or IBC mode) are used as additional candidates beyond the default search areas, up to 10 merge candidates are derived from the neighboring PUs and by prioritizing the candidates outside the IntraTMP search range. In addition, up to 20 auto-relocated block vector prediction (AR-BVP) candidates are constructed to get more reference positions.

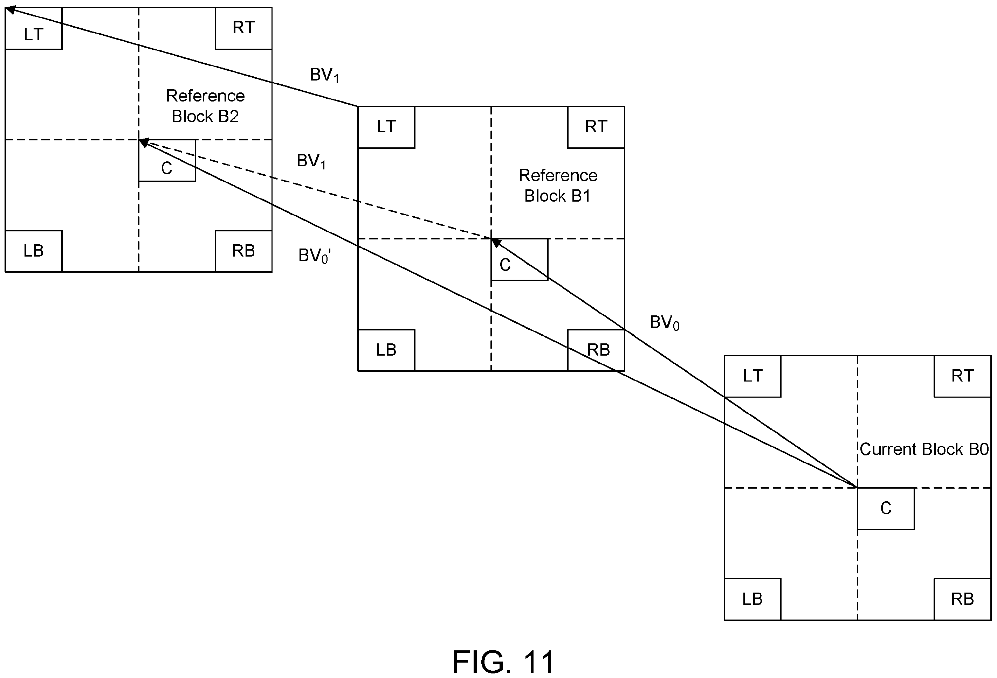

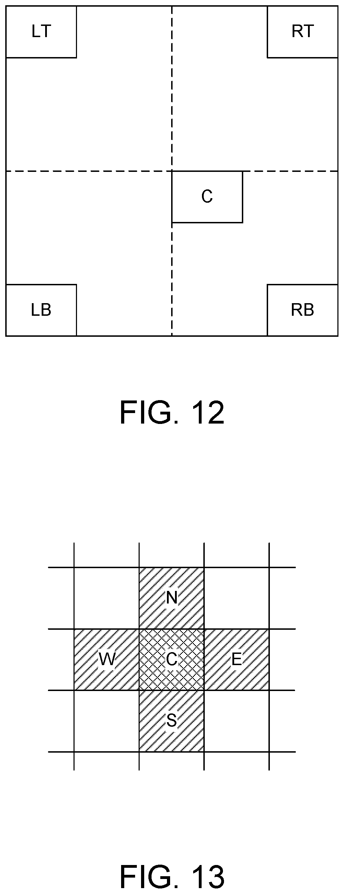

As shown in FIG. 11, a guiding block vector $BV_0$ (i.e., an existing BVP already in the candidate list) associated with the current block B0 points at a reference block B1. If B1 has a BV denoted as $BV_1$ pointing at a reference block B2, then $BV_0'$, given by $BV_0' = BV_0 + BV_1$, is defined as the AR-BVP. $BV_1$ itself can also be directly used as AR-BVP to get more available candidates. When deriving AR-BVP, all five positions including top-left (e.g., LT in FIG. 12), top-right (e.g., RT in FIG. 12), center (e.g., C in FIG. 12), bottom-left (e.g., LB in FIG. 12), and bottom-right (e.g., RB in FIG. 12) positions of the reference block are checked to find the reference block's BVs. Both the merge candidates from the neighboring PUs and constructed AR-BVPs can be used as guiding BVs. The construction will be recursively processed until the number of AR-BVPs reaches 20 or no new AR-BVPs are constructed.

Finally, up to 20 AR-BVPs can be constructed and there would be up to 30 merge candidates in total. If an AR-BVP candidate is selected for refinement, it would have a refinement range of 3×3.

The same template matching cost is used to compare the merge positions and the defaults ones. For bi-directional IBC merge candidate, two candidates are retained corresponding to each reference frame. Similarly, for IntraTMP, two candidates are considered corresponding to the best candidate by template search and the coded candidate. Sum of absolute differences (SAD) is used as a cost function.

A given search order of the 6 regions is utilized, i.e., R4, R5, R6, R1, R2, and R3. Within each region, the decoder constructs a candidate list of up to 19 template matching block vectors that are ranked in ascending order according to the template cost (SAD). The following modes are supported:

1. Single predictor: A single predictor is selected from the candidate list.

2. Fusion of multiple predictors: multiple predictors are blended to derive the final prediction block. The blending weights are either computed from the template matching cost of each predictor, or with a Wiener-filter based weight derivation method.

3. Sub-pel precision: When a single predictor is used, sub-pel precisions are supported. A new candidate list is constructed by including the selected integer block vector and surrounding 1/2-pel and 1-4-pel sub-pel positions. The list is sorted based on the same cost function used for the integer BV search. After that, the first two candidates are allowed to be selected with one single flag being signaled from encoder to decoder.

4. linear filter model: A linear filter can be learned between the reference template and current template and be applied to reference block. This mode can be used for single predictor when sub-pel precision is not used.

Additionally, IntraTMP with local illumination compensation is allowed. The following considerations are taken:

1. Usages of LIC and FLM (Linear Filter Model, CCCM-like filtering) are mutually exclusive for a given CU.

2. Usages of LIC together with fusion in intra TMP is allowed.

3. Top-only and Left-only template usage for LIC model determination is allowed for screen content coding. For camera-captured coding, only the top-left template is employed.

4. Multi Mode Linear Model (MMLM) is supported similarly to IBC-LIC, for screen content coding.

When LIC is used for a given CU, the Intra TMP search process employs MRSAD (Mean-Removed SAD) rather than SAD distortion function.

The dimensions of all regions (SearchRange_w, SearchRange_h) are set proportional to the block dimension (BlkW, BlkH) to have a fixed number of SAD comparisons per pixel. That is:

$$SearchRange\_w = min(64, a * BlkW)$$

$$SearchRange\_h = min(64, a * BlkH)$$

where *a* is a constant that controls the gain/complexity trade-off. In an example, *a* is equal to 5.

To speed-up the template matching process, the search range of all search regions is subsampled by a factor of 3. After finding the best match, a refinement process is performed. The refinement is done via a second template matching search around the best match with a reduced range.

The Intra template matching tool is enabled for CUs with size less than or equal to 64 in width and height. This maximum CU size for Intra template matching is configurable.

The Intra template matching prediction mode is signaled at CU level through a dedicated flag when DIMD is not used for current CU.

**Intra TMP based on linear filter model (Intra TMP-FLM prediction mode)**

In ECM, Intra TMP can be used in combination with a convolution filtering method as follows.

A 6-tap filter, consisting of a 5-tap plus sign shape spatial component and a bias term, is adaptively used to enhance the Intra TMP block prediction. The input to the spatial 5-tap component of the filter consists of a center C sample in the reference block which is at corresponding locations with the sample in the current block to be predicted and its above/north (N), below/south (S), left/west (W) and right/east (E) neighbors as illustrated below.

The bias term B represents a scalar offset between the input and output and is set to middle luma value (512 for 10-bit content). Output of the filter is calculated as follows:

$$\mathrm{predLumaVal} = c0*C + c1*N + c2*S + c3*E + c4*W + c5*B$$

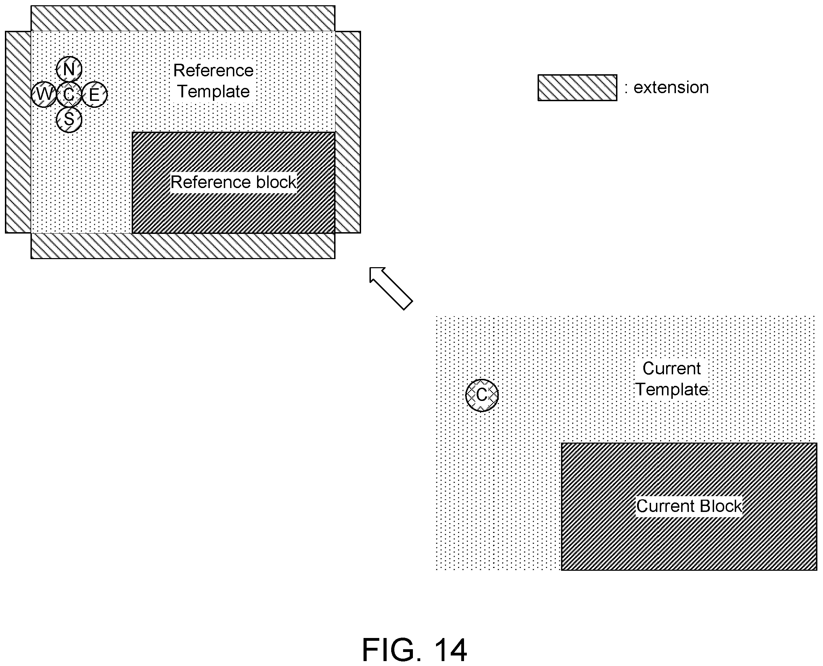

The filter coefficients $c_i$, $i = 0, 1, ... , 5$, are calculated by minimising the MSE between the reference template and current template, as shown in FIG. 14. The template size and shapes are same as in IntraTMP, and the template size used for training is 4 lines above and to the left of the current block depending on their availability. The extensions to the area are needed to support the "side samples" of the plus shaped spatial filter and are padded when in unavailable areas.

Usage of the Intra TMP-FLM mode is signalled by a CU-level flag. Specifically, Intra TMP-FLM is considered a sub-mode of Intra TMP. That is, Intra TMP-FLM flag is only signalled if the Intra TMP flag is true.

It is noted that the MBVD coding mode is used for IBC but is not used for coding units coded in Intra TMP mode. Furthermore, it is noted that the MBVD block vector coding in IBC brings noticeable coding efficiency improvement, in particular for the case of screen content coding. The basic principle of the present application is to employ the MBVD block vector difference coding mechanism also in the case of coding units in the Intra TMP mode. Since MBVD improves the performances of the IBC tool, we expecte that using MBVD in the scope of IntraTMP is likely to improve the performance of IntraTMP coding tool as well.

The following characteristics are discussed below.

1. For an intra CU coded in IntraTMP mode, the MBVD mode is allowed. A CU level MBVD index indicating the index in a list of candidates block vector differences is signaled in the bit-stream.

2. Characteristics 1, where a CU-level MBVD base index is signaled to indicate the IntraTMP block vector candidate, on top of which a BV difference is about to be applied to reconstruct the BV of the IntraTMP coding unit.

3. Characteristics 1 or 2, where a CU-level MBVD flag is signaled in the bit-stream and indicates if MBVD is used for the considered coding unit.

4. Charateristics 1, 2, or 3 where the BV difference of the IntraTMP is decoded by deriving a BV difference from the MBVD index, and possible the MBVD base index and poissibly the MBVD flag.

5. Charactiristics 4, where the decoded BV difference is added to the Intra TMP block vector obtained from IntraTMP BV search, which is jointly applied by the encoder and the decoder.

6. Characteristics 1, where the activation of the MBVD mode at CU level is derived at decoder side based on the signaled intra_tmp index which identifies the IntraTMP BV candidate used to represent the CU's BV,

7. Characteristics 6, where for some reserved intra-tmp-idx values, the MBVD flag is signaled to indicate MBVD usage, whereas for other intra-tmp-idx values, MBVD flag is inferred to 0.

8. Any characteristics among 1 to 7, where the Intra TMP block vector search is conditioned based on the BV difference associated to the CU.

9. Characteristics 8 where the sparse BV search space is arranged based on the fact that MBVD is used in the current CU, and possibly based on the associated BV difference magnitude.

10. Characteristics 8 where the merge BV search space is arranged based on the fact that MBVD is used in the current CU, and possibly based on the associated BV difference magnitude.

11. Any characteristics among 1 to 7, where the usage of MBVD is allowed only if the signaled intra-tmp-idx indicates the usage of an IntraTMP merge candidate.

12. Any characteristics among 1 to 7, where the usage of MBVD is allowed only if the signaled intra-tmp-idx indicates the usage of an IntraTMP non-merge candidate.

In the following, we present the basic principle of our proposed methods. It modifies the processes for Intra-TMP mode signaling and IntraTMP BV coding and decoding, respectively at encoder and decoder sides.

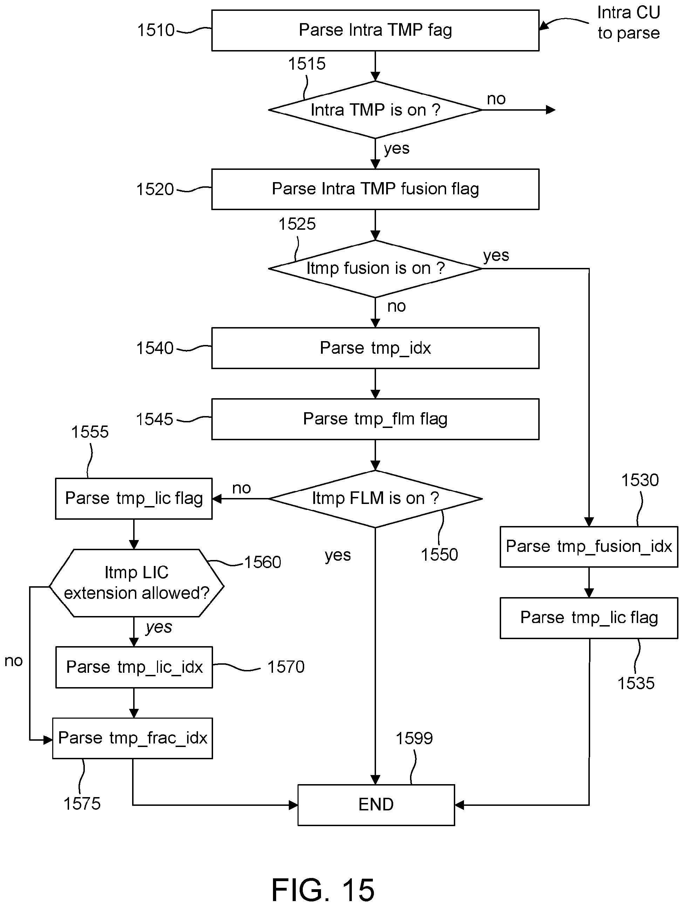

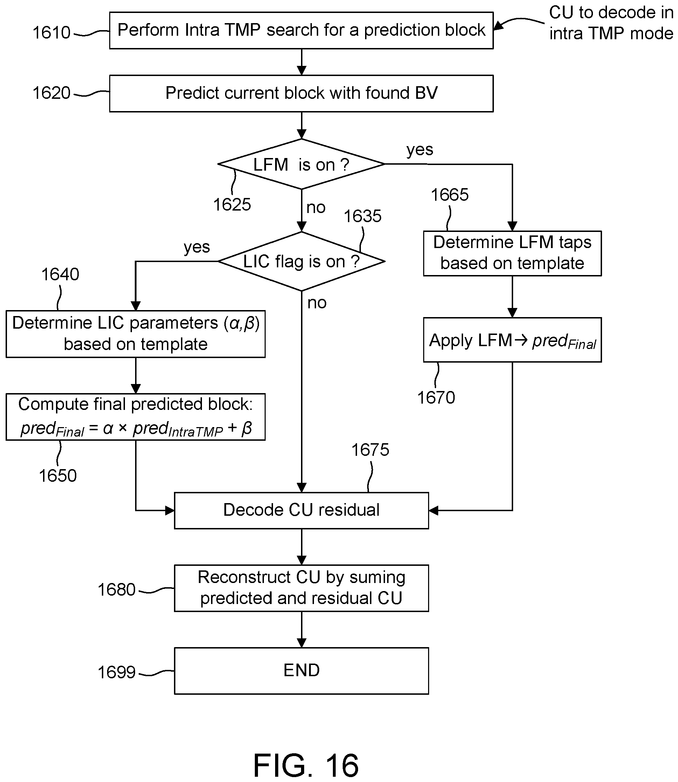

First, FIG. 15 and FIG. 16 show the bit-stream decoding (or parsing) process of a CU coded in IntraTMP prediction mode, and the decoding process of a CU coded in IntraTMP mode in ECM8.

Parsing of IntraTMP related syntax elements proceeds as follows. The input to the process of FIG. 15 is an Intra CU to parse. Firs the decoder decodes (1510) the IntraTMP flag.. If the IntraTMP flag (1515) is false, then the CU is not in IntraTMP mode and remaining steps are not shown here, because they are out of the scope of this work.

Otherwise, the decoder parses (1520) the Intra TMP fusion flag. If this flag (1525) is true, then the intra TMP fusion index, which indicates which Intra TMP fusion candidate is used to predict current CU, is decoded (1530). Then the LIC flag is parsed (1535), then the process is over (1599).

If the Intra TMP fusion flag (1515) is false, then the following applies. The Intra TMP index, which indicates which block vector candidate in the sorted list of Intra TMP candidate is used to derive the block vector of current CU, is parsed (1540).

Next, tmp_flm_flag, which indicates if FLM is applied, is parsed (1545). If Intra TMP FLM (1550) is on, then the parsing process is over (1599). Otherwise, the tmp_lic flag, which indicates if LIC is applied, is parsed (1555). Next, if LIC is on, and if LIC adaptive template usage (1560) is allowed (called LIC extension in FIG. 15), then tmp_lic_idx is parsed (1570). It indicates the top-only, left-only, or top-left template area used to derive LIC model parameters. Finally, tmp_frac_idx is parsed (1575), which indicates if a fractional BV is used to predict the current CU, and which subpel position is pointed to by the CU's BV.

FIG. 16 shows the IntraTMP CU decoding process as in ECM8. It takes place later than the CU parsing process of FIG. 15 in the overall video decoding process.

The input to the process is an CU to decode in Intra TMP mode. First Intra TMP BV search is applied (1610), as previously explained. Next, the CU is predicted (1620) by the block vector identified in the BV search. Next, if FLM is on for current CU (1625), then FLM filtering parameters are derived (1665) and FLM is applied (1670). Otherwise, if LIC is on (1635), then the LIC linear model is derived (1640) and LIC is applied (1650).

Finally, CU residual is decoded (1675), and the CU is reconstructed (1680) by adding the decoded CU residual to the predicted CU.

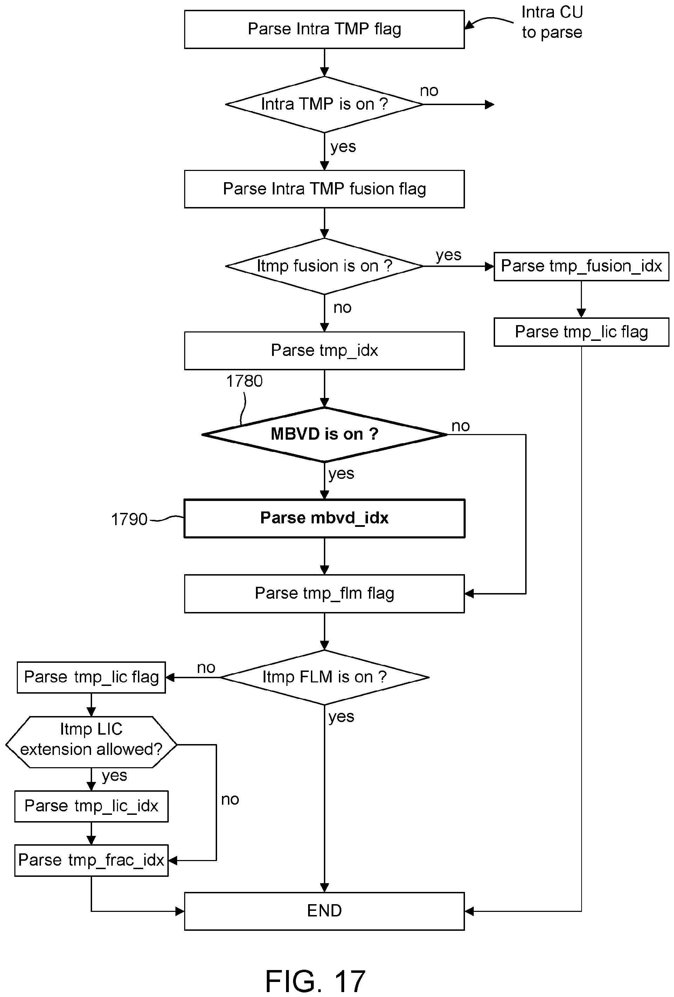

FIG. 17 shows the modified Intra TMP CU parsing process according to an embodiment. The difference with the process of FIG. 15 lies in the parsing of MBVD related syntax elements, which is introduced below.

That is, after the tmp_idx syntax element is parsed from the bit-stream, then a test checks (1780) if MBVD is on for the current CU. If yes, then the MBVD index syntax element, noted mbvd_idx, is parsed (1790) from the bit-stream. It indicates the direction and length of the block vector difference to be added to the block vector derived by the Intra TMP block vector search.

In this first embodiment, the usage of MBVD for considered CU is derived from the Intra TMP candidate index (tmp_idx) value previously parsed.

In particular, in the first embodiment, some values of tmp_idx are reserved to jointly indicate the Intra TMP candidate on which the BV difference (BVD) is to be applied, and the fact that a BVD is applied to BV found by the Intra TMP search process. The Intra TMP candidate BV to which a BVD is applied is called the base Intra TMP candidate for MBVD.

Alternatively, in a variant, if the Intra tmp index is equal to some reserved value, then it may indicate that MBVD is allowed. Then a MBVD flag may be signaled to indicate that MBVD is actually used in the current block. Then, the MBVD index may be signaled to indicate the base Intra TMP candidate, as well as the BVD direction and length.

Alternatively, the MBVD flag may be systematically signaled for an intra TMP CU, to indicate that MBVD is used. If not, then the usual IntraTMP parsing process and decoding process may be used.

If MBVD is used, then it may be allowed for any IntraTMP candidate BV. The mbvd index may then indicate which is the base MBVD candidate and the BVD direction and length.

In an alternative embodiment, MBVD may only be allowed to be applied to some particular types of Intra TMP BV candidate. For instance, it may only be allowed to be applied in Intra TMP merge candidate, i.e. BV candidates inherited from neighboring CUs, and not BVs obtained from searching in the Intra TMP search regions of FIG. 10.

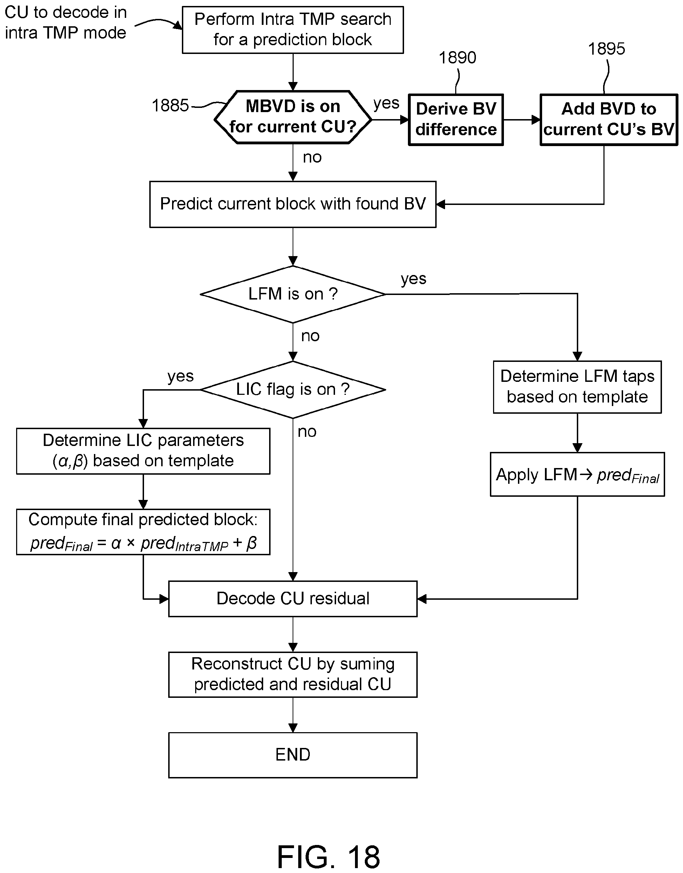

FIG. 18 shows the modified intra TMP CU decoding process according to an embodiment.

The main difference with the usual Intra TMP decoding process of FIG. 16 concerns the block vector reconstruction process. Indeed, after the IntraTMP BV search process is achieved at first step of FIG. 18, then a test check of MBVD is on (1885) for the current CU. If no, then the usual IntraTMP CU decoding steps are performed. If MBVD is on, then the BV difference is derived (1890) from the parsed mbvd_idx syntax element. Then the derived BV difference is added (1895) to the BV found in the IntraTMP search process. Then the remaining CU decoding steps remain the same.

**Configuring the Intra TMP BV refinement space according to MBVD usage and BV difference**

According to a further embodiment the set of spatial positions considered for the BV refinement step of the Intra TMP BV search process may be adjusted according to the received BV difference. Specifically, as explained previously, the Intra TMP search consists in a first sparse search step, which considered a sub-samples IntraTMP search region, followed by a refinement step of N best candidates inherited from the spare search stage.

In an embodiment, the IntraTMP BV search space is configure according to the BV difference vector length indicated in the bit-stream.

Basically, if the decoder is able to know that MBVD is used before performing the intra search space, then the sparsity in the search space is adjusted according to the length of the signaled BVD.

More precisely, the BV search regions are sub-sampled such that the minimal distance between positions visited by the template matching search is twice the magnitude of the signaled BV difference. This ensures that non redundant positions are considered between the template-matching search and the MBVD tool.

**Configuring IntraTMP-MBVD differently from MBVD mode used in IBC**

In a variant, the set of BV directions and distances that can be reached by MBVD in the case of Intra TMP may be different from the set of possible MBVD positions considered in the IBC coding mode.

Indeed in IBC, as previously described, MBVD distances are taken from the set {1-pel, 2-pel, 4-pel, 8-pel, 12-pel, 16-pel, 24-pel, 32-pel, 40-pel, 48-pel, 56-pel, 64-pel, 72-pel, 80-pel, 88-pel, 96-pel, 104-pel, 112-pel, 120-pel, 128-pel}, and the BVD directions are two horizontal and two vertical directions.

In the case of Intra TMP, a smaller set of distances may be considered, to make MBVD synergize well with the IntraTMP BV search mode.

For example, the set {1-pel, 2-pel, 3-pel} or {1-pel, 2-pel, 3-pel, 4-pel} distance sets may be considered, depending on the sparse search sampling ratio. Note this ratio depends on whether LIC is on or not in considered CU. The set of distances considered in IntraTMP-MBVD may thus depend on the LIC flag at CU-level.

Furthermore, some diagonal directions may be introduced to represent BV difference vectors in the case of IntraTMP, in addition to the vertical and horizontal directions considered in IBC mode.

On the encoder side, the usage of MBVD is typically decided based on a rate distortion optimization process. That is, in ECM, IntraTMP BV candidates are put in competition, i.e., the BV candidate leading to the coding of the current CU with the minimum rate distortion cost ($D + \lambda. R$, where D stands for the distortion, R the rate cost and $\lambda$ is the Lagrange parameter used to target a certain rate distortion trade-off) is selected. In this document, each BV candidate for which MBVD is allowed, with each BV difference applied to it, is also considered in the rate distortion cost minimization procedure. The best allowed (BV, BVD) pair is selected by the encoder and is signaled in the bit-stream, through one of the previously discussed methods to signal MBVD mode usage and BVD value used at the CU level.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, intra prediction described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

    i. Encoding, into coded video data, syntax elements that can enable the decoder to decode the coded video data, according to any of the embodiments described herein.
    ii. A bitstream that includes one or more of the described syntax elements, or variations thereof, whether transmitted, stored, or otherwise made available.
    iii. Creating, transmitting, receiving, and/or decoding of the bitstream.
    iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

> i. session description protocol (SDP), for example as described in RFCs and/or used in conjunction with real-time transport protocol (RTP) transmission.
> ii. hypertext transfer protocol (HTTP) live Streaming (HLS) manifest transmitted over HTTP.
> iii. dynamic adaptive streaming over HTTP (DASH) media presentation description (MPD) descriptors, for example as used in DASH and transmitted over HTTP.
> iv. RTP header extensions, for example as used during RTP streaming.
> v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A method of video decoding, comprising:

   obtaining a base block vector for a block of a picture in an intra template matching prediction mode;
   decoding a block vector difference for the block;
   obtaining a block vector for the block based on the base block vector and the block vector difference for the block;
   obtaining a prediction block for the block based on the block vector for the block; and
   decoding the block based on the prediction block for the block.

2. An apparatus for video decoding, comprising one or more processors and at least one memory coupled to the one or more processors, wherein the one or more processors are configured to:

   obtain a base block vector for a block of a picture in an intra template matching prediction mode;
   decode a block vector difference for the block;
   obtain a block vector for the block based on the base block vector and the block vector difference for the block;
   obtain a prediction block for the block based on the block vector for the block; and
   decode the block based on the prediction block for the block.

3. The method of claim 1, further comprising, or the apparatus of claim 2, wherein the one or more processors are further configured to perform:

   obtaining a list of candidate block vector differences;
   decoding an index into the list of candidate block vector differences; and
   obtaining a block vector difference corresponding to the index as the block vector difference for the block.

4. The method of claim 1 or 3, or the apparatus of claim 2 or 3, wherein the index indicates at least a direction and a length of the block vector difference.

5. The method of claim 4, or the apparatus of claim 4, wherein the direction of the block vector difference is diagonal.

6. The method of any one of claims 1 and 3-5, further comprising, or the apparatus of any one of claims 2-5, wherein the one or more processors are further configured to perform:

   obtaining a set of block vector candidates; and
   performing a block search for each respective one of the set of block vector candidates, wherein the block search includes a sparse search and a refinement, and wherein a search precision of the sparse search is based on a length of the block vector difference.

7. The method of any one of claims 1 and 3-6, or the apparatus of any one of claims 2-6, wherein a search space of the block search is based on a length of the block vector difference.

8. The method of claim 7, or the apparatus of claim 7, wherein a minimum distance between positions visited by the block search is twice the length of the block vector difference.

9. A method of video encoding, comprising:

   obtaining a base block vector for a block of a picture in an intra template matching prediction mode;
   encoding a block vector difference for the block;
   obtaining a block vector for the block based on the base block vector and the block vector difference for the block;
   obtaining a prediction block for the block based on the block vector for the block; and

encoding the block based on the prediction block for the block.

10. An apparatus for video encoding, comprising one or more processors and at least one memory coupled to the one or more processors, wherein the one or more processors are configured to:

   obtain a base block vector for a block of a picture in an intra template matching prediction mode;
   encode a block vector difference for the block;
   obtain a block vector for the block based on the base block vector and the block vector difference for the block;
   obtain a prediction block for the block based on the block vector for the block; and
   encode the block based on the prediction block for the block.

11. The method of claim 9, further comprising, or the apparatus of claim 10, wherein the one or more processors are further configured to perform:

   obtaining a list of candidate block vector differences; and
   encoding an index, corresponding to the block vector difference, into the list of candidate block vector differences.

12. The method of claim 11, or the apparatus of claim 11, wherein a respective rate distortion cost is determined for each candidate in the list of candidate block vector differences, and wherein the index corresponds to a candidate with a minimum rate distortion cost among the list of candidate block vector differences.

13. The method of claim 9, 11 or 12, or the apparatus of any one of claims 10-12, wherein the index indicates at least a direction and a length of the block vector difference.

14. The method of any one of claims 9 and 11-13, or the apparatus of any one of claims 10-13, wherein the direction of the block vector difference is diagonal.

15. A signal comprising video data, formed by performing the method of any one of claims 9 and 11-14.

FIG. 1

EP 4 730 767 A1

FIG. 2

EP 4 730 767 A1

FIG. 3

EP 4 730 767 A1

FIG. 4

FIG. 5

FIG. 6

X  Proposed candidates

Reconstructed Region

Reference Region

FIG. 7

FIG. 8

EP 4 730 767 A1

| | | m-2,n-2 | m-1,n-2 | m,n-2 | m+1,n-2 | | |
| | | m-2,n-1 | m-1,n-1 | m,n-1 | m+1,n-1 | | |
| | | m-2,n | m-1,n | m,n | | | |

: reference area

FIG. 9

FIG. 10

FIG. 11

FIG. 12

FIG. 13

Reference
Template

Reference block

: extension

Current
Template

Current Block

FIG. 14

1510 — Parse Intra TMP fag ← Intra CU to parse

1515

Intra TMP is on ? — no →

yes

1520 — Parse Intra TMP fusion flag

1525

Itmp fusion is on ? — yes

no

1540 — Parse tmp_idx

1545 — Parse tmp_flm flag

1555

Parse tmp_lic flag ← no — Itmp FLM is on ?

1550

yes

1530

Parse tmp_fusion_idx

Itmp LIC extension allowed? — 1560

no

yes

Parse tmp_lic_idx — 1570

Parse tmp_lic flag

1535

Parse tmp_frac_idx

1575

1599

END

FIG. 15

1610 — Perform Intra TMP search for a prediction block ← CU to decode in intra TMP mode

1620 — Predict current block with found BV

1625 LFM is on ?

**yes** →

1665 Determine LFM taps based on template

Apply LFM → $pred_{Final}$

1670

**no** 1635 LIC flag is on ?

**yes** →

1640 Determine LIC parameters $(\alpha,\beta)$ based on template

**no**

1650 Compute final predicted block: $pred_{Final} = \alpha \times pred_{IntraTMP} + \beta$

1675 Decode CU residual

1680 — Reconstruct CU by suming predicted and residual CU

1699 — END

# FIG. 16

FIG. 17

CU to decode in
intra TMP mode

Perform Intra TMP search
for a prediction block

1885 — MBVD is on
for current CU?

yes → Derive BV
difference

1890

Add BVD to
current CU's BV

1895

no

Predict current block with found BV

LFM is on ? — yes

no

LIC flag is on ?

yes

no

Determine LFM taps
based on template

Determine LIC parameters
$(\alpha, \beta)$ based on template

Compute final predicted block:
$pred_{Final} = \alpha \times pred_{IntraTMP} + \beta$

Apply LFM → $pred_{Final}$

Decode CU residual

Reconstruct CU by suming
predicted and residual CU

END

# FIG. 18

Europäisches
Patentamt

European
Patent Office

Office européen
des brevets

# EUROPEAN SEARCH REPORT

**Application Number**

EP 24 30 6726

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/223797 A1 (CHEN CHUN-CHI [US] ET AL) 4 July 2024 (2024-07-04) | 1-5,9-15 | INV. H04N19/105 |
| Y | * paragraph [0005] - paragraph [0006] * * paragraph [0075] * * paragraph [0114] * * paragraph [0218] - paragraph [0219] * | 6-8 | H04N19/147 H04N19/176 H04N19/513 |
| | ----- | | |
| A | WO 2024/010943 A1 (OFINNO LLC [US]) 11 January 2024 (2024-01-11) * paragraph [0210] * | 5,14 | |
| | ----- | | |
| A | WO 2024/076549 A1 (OFINNO LLC [US]) 11 April 2024 (2024-04-11) * paragraph [0201] * | 5,14 | |
| | ----- | | |
| Y | RUIZ COLL (OFINNO) D ET AL: "AHG12: Harmonized IBC/ITMP search area with adaptive sampling", 32. JVET MEETING; 20231013 - 20231020; HANNOVER; (THE JOINT VIDEO EXPLORATION TEAM OF ISO/IEC JTC1/SC29/WG11 AND ITU-T SG.16 ), , no. JVET-AF0161 7 October 2023 (2023-10-07), XP030312291, Retrieved from the Internet: URL:https://jvet-experts.org/doc_end_user/documents/32_Hannover/wg11/JVET-AF0161-v1.zip JVET-AF0161_v1/JVET-AF0161_v1.docx [retrieved on 2023-10-07] * Sections 1 and 2 * | 6-8 | **TECHNICAL FIELDS SEARCHED (IPC)**<br><br>H04N |
| | ----- | | |

The present search report has been drawn up for all claims

| Place of search | Date of completion of the search | Examiner |
|---|---|---|
| The Hague | 8 April 2025 | Molina Sedgwick, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 24 30 6726

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2025

| Patent document cited in search report | Publication date | Patent family member(s) | Publication date |
|---|---|---|---|
| US 2024223797 A1 | 04-07-2024 | TW 202433935 A<br>US 2024223797 A1 | 16-08-2024<br>04-07-2024 |
| WO 2024010943 A1 | 11-01-2024 | NONE | |
| WO 2024076549 A1 | 11-04-2024 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NA ZHANG et al.** EE2-3.1: IBC Merge Mode with Block Vector Differences. *Joint Video Experts Team (JVET) of ITU-T SG 16 WP 3 and ISO/IEC JTC 1/SC 29, 27th Meeting, by teleconference*, July 2022